# EUROPEAN PATENT APPLICATION

(11) **EP 4 752 489 A1**
(43) Date of publication of application: **03.06.2026**
(21) Application number: 25204931.7
(22) Date of filing: 26.09.2025
(51) Int. Cl.: F27B 3/18, C03B 3/02, C03B 5/235, F27B 3/20, F27B 3/22, F27B 15/00, F27B 15/02, F27B 15/09, F27B 15/12, F27D 17/10, F27D 17/20

(54) **OXY-COMBUSTION KILN FOR FRITS AND GLAZES WITH A RAW MATERIAL PREHEATING SYSTEM**

(30) Priority: 25.10.2024 ES 202431964 U
(71) Applicant: Ingeneo Equipos Industriales, S.L., 12001 Castellón de la Plana, Castellón (ES)
(72) Inventor: JIMENEZ ROMERO, Luis, 12001 Castellón de la Plana (ES); NEBOT FORÉS, Ramón, 12001 Castellón de la Plana (ES)
(74) Representative: Polo Montañés, Carlos

(57) **Abstract**

The invention envisages a new preheating system for preheating raw material which increases energy efficiency. To that end, based on the conventional structuring of an oxy-combustion kiln, the invention focuses on the fact that it includes a preheating system for preheating raw material to a temperature of the order of 500°C, embodied as a preheating hopper (2.5) which is established between the feeding silo (1.1) and the loading opening of the kiln, which preheating hopper (2.5) is fed from the outlet of the heat recovery device (1.7) through a hot fume conduit (2.2) and includes a fluidization system.

## Description

### TECHNICAL FIELD

The present invention belongs to the sector of ceramic frits and more specifically to melting kilns in this sector with combustion technology which uses mainly natural gas or hydrogen as fuel in combination with air, oxygen, or a proportion thereof as an oxidizing agent.

### OBJECT OF THE INVENTION

The object of the invention is to provide a kiln for frits and glazes with a new raw material preheating system in order to increase the energy efficiency thereof.

The invention is based on harnessing heat present in kiln exhaust fumes for heating powdery raw material, increasing its temperature from 20ºC to about 500ºC, depending on the raw materials, thereby improving the specific consumption of the kiln by around 16% since, by introducing the preheated raw material, said energy does not have to be provided by the fuel, with less energy therefore being required to reach the melting temperatures of around 1500ºC.

Therefore, the object of this invention is to reduce fuel and oxidizing agent consumption, also reducing the carbon emissions produced during combustion reactions of the fuels used. To that end, part or all of the hot kiln exhaust fumes are diverted by means of the combination of at least one suction fan and a set of valves for preheating the raw material before being introduced in the kiln.

For the transfer of heat from the fumes to the raw material, a system for fluidization similar to the fluidizations used in raw material silos to facilitate raw material discharge is used. These residual gases are at about 650ºC after leaving an existing recovery system such as a fuel and oxidizing agent preheating system.

These fumes are introduced mid-height into a preheating hopper by means of a fluidization system, the hot fumes are mixed with the raw material entering at about 20ºC and, by means of a plurality of "booth"-shaped inlets, heat from the gases is transmitted to the raw material by means of the convection transfer mechanism, reaching temperatures of around 500ºC.

Moreover, it must be taken into account that certain raw materials do not tolerate said preheating because they contain at least one component with a melting point lower than said 500ºC, or they give off water when heated, or are hygroscopic, etc. Therefore, the maximum temperature will be determined according to these limitations and can be regulated by means of dilution valves or by means of modifying the residence time inside the hopper with the help of load cells.

Once the raw material has been heated in the constant-level hopper, the fumes that have transferred part of their heat to the raw material have cooled down to about 180ºC, and they then flow to the bag filter, given that both in the kiln and in the preheater these fumes have picked up certain solid particles which are entrained in the gaseous stream and therefore must be filtered out as a step before emission into the atmosphere.

### BACKGROUND OF THE INVENTION

Taking into account the current situation in which the reduction of the use of greenhouse effect fuels is pursued, it is of vital importance to optimize the energy in kilns that use as fuel natural gas, or generally any fossil fuel, and even hydrogen, since the latter does not always come from completely renewable sources. Furthermore, an improvement in production costs, improved air quality, less dependence on fuels, a significant reduction of energy costs, and therefore an improvement in the competitiveness of the companies that adopt this technology are obtained.

Kilns with oxy-combustion technology for melting ceramic frits and glazes are already known today, and the technology for recovering heat from air-gas kilns to preheat the air used as an oxidizing agent to about 850ºC is also known. For oxy-combustion technologies, the technology for preheating gas and oxygen in ceramic frit and glaze kilns is also known. Preheating powdery raw material in glass production kilns for the optimization of gas and oxygen consumption is also known to a lesser extent. Preheating recycled glass for its incorporation in melting kilns in order to reduce energy consumption and raw material consumption in said kilns with gas air or oxygen gas combustion technology is also known.

The novelty of this invention lies in the adaptation of the technology for preheating raw material in ceramic frit kilns, taking into account its challenges and peculiarities. For said adaptation, there was a need to develop a constant-level hopper with a fluidization system capable of working with fumes at about 650ºC, preventing blockage in the system with raw material at 500ºC. There was also a need to improve screw feeding systems or the like which are capable of working with the raw material preheated to 500ºC and with their corresponding heat resistance to prevent losses through walls both in the hopper and in the feeder or feeders. Additionally, the invention envisages a starter compressed air injection system to achieve the start of the fluidization effect since it stops working when the raw material solidifies in the hopper. Also included is a constant-level control by means of load cells and a leak-tight screw feeder with a rotary valve feed to prevent outside air from entering the hopper. A ceramic bag filter, which is installed above the preheating hopper to purify gases and also to prevent them from flowing into the suction fan and then into the atmosphere, has also been developed.

### DESCRIPTION OF THE INVENTION

The proposed kiln satisfactorily solves the problems set forth above such that, based on the conventional structuring of kilns of this type, the features of the proposed kiln focuses on the inclusion of a direct preheating hopper.

In this hopper, the raw material will be heated to about 500ºC or to the maximum possible temperature allowed by the raw material, using the heat or residual energy of the fumes exiting the kiln or effluents.

Depending on the characteristics of the raw materials or the installations, the hot gas introduced into the hopper to heat the raw material can be the process gaseous effluent itself, which is transported directly, or in an air stream preheated in an intermediate exchanger by the gaseous effluent, before its introduction into the hopper, the latter being indirect heating.

This preheating hopper is installed between the feeding silo and the kiln, replacing the conventional constant-level hopper if the kiln itself had one, directly or indirectly using the energy of the exhaust fumes originating from combustion to be introduced by an insulated manifold in the intermediate part of the preheating hopper.

A controlled air dilution by means of a servomotor or the like can be installed to protect the preheating hopper from temperatures above 650ºC.

A set of bypass valves can be installed to regulate the maximum temperature of the preheating hopper. These valves are also applicable to enable working without resorting to preheating if the raw material is not to be heated and work is only to be performed with the ceramic bag filter for any reason.

More specifically, hot gases enter the preheating hopper by means of a plurality of "booth"-shaped inlets. This design allows the passage of solid raw material by gravity and the passage of preheating gases by forced intake, generating the fluidization effect and preventing the raw material from accumulating in the inlet manifold of the hopper. This ingenious system prevents blockage in the outlet of the fumes and homogenously distributes the amount of hot gases throughout the entire central section of the preheating hopper.

These hot gases move up through the preheating hopper, surrounding the solid particles, thus creating a fluidization effect and, as a result thereof, transferring heat from the raw material until the fumes are generally cooled to a temperature not less than 180ºC to prevent condensations in the ducts and in the bag filter or in the preheating hopper itself. This output temperature is very important and must be regulated by means of a control loop of the loading screw and the load cells such that:
If it is kept at a high level, the input temperature of the filter will be lower, in the order of 180ºC, otherwise if it is kept at a low level, the input temperature will be higher, in the order of 400ºC.

However, in order to prevent problems of excessive temperature when the hopper is almost empty, the bag filter is equipped with ceramic bags capable of withstanding temperatures above 650ºC without any problem, so it can work with the kiln even with the empty or full hopper and without expelling unfiltered fumes. This takes place particularly when frit change occurs, or simply because the process of stopping the kiln has been started. Furthermore, these bags can be used for reducing high emission indices such as, for example, NOx, since the reaction temperatures are around 300ºC as a result of the use of catalytic bags.

In the lower part of the preheating hopper, and before entering the feeder of the kiln, there is established a bottom fluidized by dry and compressed air. This novel system is responsible for starting the fluidization effect by suction given that it has sufficient pressure so as to be able to clear the material deposited at the bottom of the hopper, because, if this is stopped and a long time has passed, the material tends to absorb moisture from the environment, and therefore can solidify and harden. After having cleared the fluidized bottom, the already preheated material with temperatures in the order of 500ºC enters the feeding screw of the kiln, this equipment presenting certain novelties with respect to conventional feeders given that, first, it is manufactured with high temperature- and abrasion-resistant steels, in addition to having a diameter greater than current diameters in order to reduce the speed of the screw, and therefore reduce any wear and tear by abrasion since the anti-abrasion materials lose resistance drastically due to high temperatures.

Another aspect to be highlighted is that, like all the conduits carrying hot gases, the tube of the feeder of the kiln which contains the screw has a coating made of an insulating material with low thermal conductivity such as microporous materials, rock wool, or ceramic fiber, since there is a need to prevent heat loss through walls and also for safety reasons in the event of factory staff accidentally contacting same. Once inside, the material piles up inside the kiln until it starts to melt, with the interesting peculiarity that, since it is already hot, about 16% less gaseous fuel is used.

Moreover, the filtration equipment is installed right above the preheating hopper and this is a significant advantage from a waste management viewpoint since the powdery particles entrained by the fumes are recirculated again into the melting kiln, particularly when the filter is in cleaning mode by means of compressed air.

Furthermore, the raw material itself often contains components such as calcium oxide and it is ideal to enable neutralizing certain acid emissions, such as hydrofluoric acid which is very common in sheet glaze kilns. In this way, it is not necessary to keep an eye out for the addition of the neutralizing reagent in microdispensers like in conventional bag filters.

The already filtered fumes then flow through the high-pressure suction fan which is responsible for fume extraction, the fluidization effect, and pressure control of the kiln.

Finally, the already filtered fumes with little harnessable enthalpy are, depending on if they have been used indirectly or directly, expelled into the atmosphere in an environmentally friendly manner, or transported again to the chimney downstream of the extraction area thereof.

As can be seen, various problems associated with the ceramic frit production process are solved or improved with this novel preheating system: firstly, natural gas and oxidizing agent consumption is reduced, increasing efficiency and reducing the carbon footprint of the process. Secondly, in the case of direct heating by means of effluents from the kiln, the materials collected in the filtration system, which would otherwise be collected in the end-of-line filtration equipment, are reused. Thirdly, by reducing the temperature of the emitted gases, the volume of the gases is also reduced proportionally, so the filtering surface required is very small, in the order of 5 times.

In addition, the rest of the common elements making up a current design of an oxy-combustion kiln for frits and glazes remain the same, thereby defining a new system capable of harnessing heat from fumes originating from the surplus of heat recovery devices of oxy-combustion kilns for glaze frits to obtain about 16% energy savings.

### BRIEF DESCRIPTION OF THE DRAWINGS

To complement the description that will be made below and for the purpose of helping to better understand the features of the invention according to preferred practical embodiment thereof, a set of drawings is attached as an integral part of said description, wherein the following is depicted in an illustrative and non-limiting manner:
Figure 1 shows a profile and section view of an oxy-combustion kiln for frits and glazes with a raw material preheating system made according to the object of the present invention.

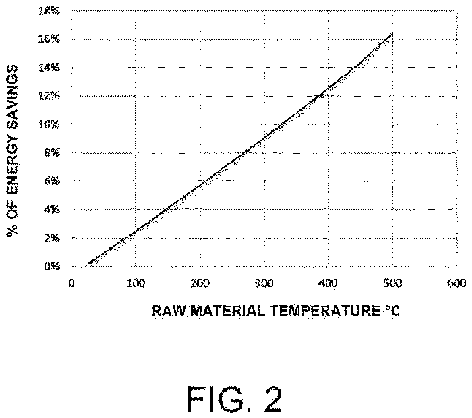

Figure 2 shows a graph corresponding to the energy savings of the kiln based on the temperature at which the preheated raw material enters said kiln.

### PREFERRED EMBODIMENT OF THE INVENTION

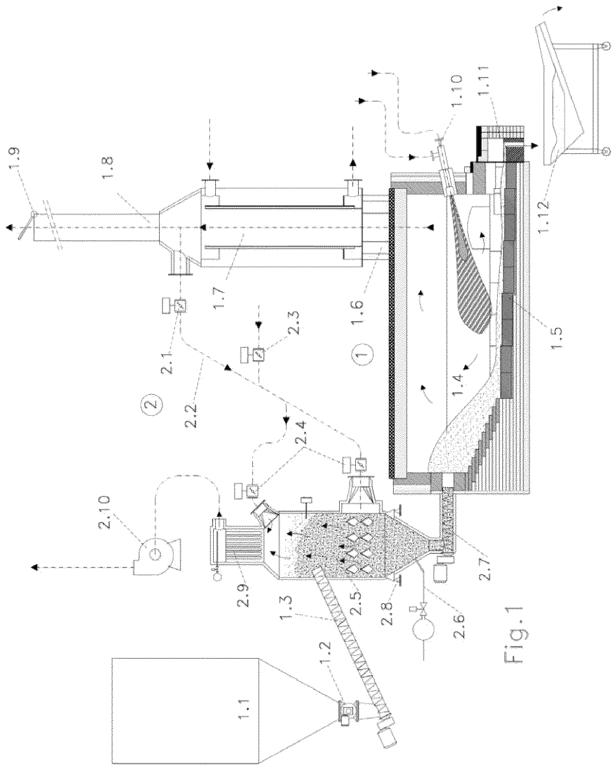

In Figure 1, the following reference numbers have been used, separated into two groups for better understanding of the features that were already known and of the novel features which are the focus of the invention.

Group (1): Corresponding to conventional elements in an oxy-combustion kiln that are part of the current state of the art.
- Feeding silo (1.1).
- Rotary valve (1.2).
- Screw conveyor (1.3).
- Combustion chamber (1.4).
- Floor (1.5).
- Refractory brick chimney (1.6).
- Heat recovery device (1.7).
- Metal chimney (1.8).
- Exhaust valve (1.9).
- Burner (1.10).
- Exit spout (1.11).
- Vibrating tray (1.12).

Second group (2): Corresponding to elements which are the focus of the essence of the invention.
- Fume extraction valve (2.1).
- Hot gas extraction conduit (2.2).
- Dilution valve (2.3).
- Bypass valves (2.4).
- Preheating hopper (2.5).
- Compressed air injector (2.6).
- Kiln feeder (2.7).
- Load cells (2.8).
- Bag filter (2.9).
- Suction fan (2.10).

In view of the mentioned Figure 1, it can be seen how the kiln of the invention is based on the conventional structuring of a kiln for melting ceramic frits, in which there is a feeding silo (1.1) which contains the material to be melted.

The silo discharges through its lower part by means of a rotary valve (1.2) onto a screw conveyor (1.3) which is responsible for feeding the constant-level hopper right before the kiln feeder. This feeder is located next to the loading opening of the kiln and introduces the material into the kiln which, as is conventional, includes a combustion chamber (1.4) with a hole communicating with a refractory brick chimney (1.6) as a gas evacuation channel. The kiln includes a heat recovery device (1.7) which ends in a metal exhaust chimney (1.8) and an exhaust valve (1.9), while there is established in the lower portion a floor (1.5), usually made of an electrofused material, with the body of the kiln having its corresponding burner (1.10), an exit spout (1.11) for the exit of the molten material to a vibrating tray (1.12).

Now in accordance with the essence of the invention, it has been envisaged that right after the heat recovery device (1.7) there is established a hot gas extraction conduit (2.2) regulated by a fume extraction valve (2.1), a second dilution valve (2.3), and bypass valves (2.4) for regulating temperature. This conduit is connected at its lower part to a preheating hopper (2.5) which is supported by means of the load cells (2.8) and which, at the lower part thereof, has a compressed air injector (2.6), forming a fluidized bottom, and connected at the lower part of the cone thereof to the feeder of the kiln (2.7).

Lastly but not less importantly, right in the upper part of the preheating hopper (2.5) there is located a bag filter (2.9) with cleaning by means of compressed air, for which it is connected at the upper part, or also referred to as a clean chamber with a suction fan (2.9) to expel cooled particle-free gases into the atmosphere by means of a conduit or chimney.

## Claims

1. An oxy-combustion kiln for frits and glazes with a raw material preheating system which, based on the conventional structuring of an oxy-combustion kiln in which there is at least one feeding silo (1.1) which contains the material to be melted, provided with feeding means for feeding a kiln in which there is established a combustion chamber (1.4) associated with a gas evacuation channel in which there is a heat recovery device (1.7) which ends in an exhaust chimney and an exhaust valve (1.9), the combustion chamber (1.4) being provided with a floor (1.5), a burner (1.10), and an exit spout (1.11) for the molten material, is **characterized in that** it includes a preheating system for preheating the raw material to a temperature of the order of 500ºC, embodied as a preheating hopper (2.5) which is established between the feeding silo (1.1) and the loading opening of the kiln, which preheating hopper (2.5) is fed from the outlet of the heat recovery device (1.7) through a hot fume conduit (2.2) and includes a fluidization system.

2. The oxy-combustion kiln for frits and glazes with a raw material preheating system according to claim 1, **characterized in that** in the preheating hopper (2.5), in correspondence with its lower area, a compressed air injector (2.6) is established to act as a plunger element and to aid in fluidization.

3. The oxy-combustion kiln for frits and glazes with a raw material preheating system according to claim 1, **characterized in that** the preheating hopper (2.5) includes at its outlet a kiln feeder (2.7) obtained in high temperature- and abrasion-resistant steels.

4. The oxy-combustion kiln for frits and glazes with a raw material preheating system according to claim 1, **characterized in that** the hot gases are purified by means of a ceramic bag filter (2.9) with cleaning by means of compressed air.

5. The oxy-combustion kiln for frits and glazes with a raw material preheating system according to claims 1 and 4, **characterized in that** the hot gases accessing the preheating hopper (2.5) are suctioned by means of a suction fan (2.10) and redirected into the atmosphere.
